# EUROPÄISCHE PATENTSCHRIFT

(11) **EP 0 774 403 B1**
(45) Veröffentlichungstag und Bekanntmachung des Hinweises auf die Patenterteilung: **08.12.1999**
(21) Anmeldenummer: 96250052.6
(22) Anmeldetag: 29.02.1996
(51) Int. Cl.: B62D 55/075

(54) **Treppengängiges, motorisch angetriebenes Transportgerät**
Motor driven conveying equipment for stairs
Transporteur pour escalier entraîné par moteur

(30) Priorität: 29.08.1995 DE 29513845 U
(43) Veröffentlichungstag der Anmeldung: 21.05.1997
(73) Patentinhaber: Engelbrecht, Joachim, 33803 Steinhagen (DE)
(72) Erfinder: Engelbrecht, Joachim, 33803 Steinhagen (DE)

(56) Entgegenhaltungen:
- DE-U- 9 100 879
- DE-U- 9 418 526
- FR-A- 2 604 965
- GB-A- 1 003 703
- US-A- 3 698 500
- US-A- 3 789 941
- US-A- 4 645 022

## Beschreibung

Die Erfindung betrifft ein motorisch angetriebenes, zum Befahren von Treppen geeignetes Transportgerät mit an einem Rahmen angebrachten angetriebenen Laufbändern mit mindestens zwei Schichten, die getrennt steuerbar sind.

Transportgeräte dieser Art weisen bisher entweder zwei Riemenraupen auf, die starr miteinander über eine Antriebswelle des Motors verbunden sind und daher als ungeeignet z.B. für Wendeltreppen gelten. Oder sie sind mit einer mittig angeordnet angetriebenen Riemenraupe versehen, wobei Kippgefahr besteht - oder der Riemen so breit ist, daß wieder die Kurvengängigkeit beeinträchtigt ist.

Bei dem Patent DT 2362340 wird die Lösung durch drei Riemenraupen angestrebt, was sich ebenfalls nicht durchgesetzt hat: auch hier muß der mittlere angetriebene Riemen auf der gewandelten Treppe soviel tiefer nach unten herausragen, daß wieder im Normalbetrieb Kippgefahr droht.

Bekannt sind getrennt steuerbare Antriebe von Zahnriemenraupen, die a) mit getrennten Motoren, b) mit Differentialgetrieben, c) mit elektromagnetischen Kupplungen und Bremsen versehen sind. Keine dieser Lösungen hat sich durchgesetzt, da entweder die Herstellungskosten zu hoch sind oder die Abmessung oder das Gewicht der Vorrichtungen zu groß ist.

So werden bei dem in US 3 698 500 beschriebenen geländegänigen Raupenfahrzeug zwei Riemenkupplungen und Bremsen eingebaut zur Steuerung der beiden Raupen verwendet. Das Fahrzeug baut jedoch schwer, wie es für höhere Geschwindigkeiten ausgelegte Schneemobile üblich ist, und der starke Motor kann die Reibung der breiten Raupen bei einseitigem Antrieb auch nur auf dem weichen Untergrund bewirken.

Das in US 4 645 022 beschriebene Raupenlastenfahrzeug enthält zwei Klauenkupplungen, um den Eingriff des Antriebs auf eine der beiden Raupen zu unterbrechen. Zusätzlich sind Bremsen zur Steuerung vorgesehen. Auch dies Fahrzeug ist für den Einsatz im Freien - in Wald und Feld - konstruiert und ein seitliches Versetzen der Raupen auf dem natürlichen Boden kein Problem.

Bei dem Gebrauch in Treppenhäusern sollen die schmalen Laufbänder jedoch auf den Kanten der Treppenstufen haften und trotzdem die Lenkfähigkeit ermöglichen. Die Aufgabe der Erfindung ist es daher, ein Transportgerät mit verbesserter Lenkfähigkeit vorzustellen, bei dem die Lenkung durch leichte, kompakte und kostengünstige Komponenten ein feinfühliges sicheres Fahren auf - auch gewendelten - Treppenstufenkanten erreicht wird.

Die Aufgabe wird erfindungsmäßig dadurch gelöst, daß Laufbänder Verwendung finden, die nicht einen Formschluß zu den Treppenstufenkanten haben, sondern einen Reibschluß durch Verwendung eines besonderen Gummimaterials. Die Quetsch- und Dehnfähigkeit der besonderen, in Sandwichbauweise erstellten Laufbänder ermöglicht die Kurvengängigkeit des Gerätes, die durch handbetatigte, stufenlose, mechanische kleine Kupplungen an jedem Laufband in Kurven unterstützt wird.
Es können für den Kraftschluß mit den Antriebsrollen vielfältige Laufbandforrnen zum Einsatz kommen: Keilriemen mit schrägen Reibflanken und glatter Grundflächenschicht, Riemen mit rechteckigem Querschnitt oder Zahnriemen. Das Laufband wird vorzugsweise als Keilriemen mit einer Linatex-Laufschicht und einer hochgleitenden inneren Rutschschicht verwendet. Der Reibschluß des Keilriemens erfolgt im Bereich der angetriebenen Keilriernenscheibe an den Flanken.

Der Antrieb kann in vielfacher Weise, z.B. mit Wechselstrommotor, Gleichstrommotor, Einphasen-Kondensatormotor, Permanent-Magnetmotor oder auch mit Verbrennungsmotor erfolgen. Als Energiequelle können Batterien oder das normale elektrische Netz verwendet werden.

Die Erfindung wird nachstehend anhand dem in den Zeichnungen dargestellten bevorzugten Ausführungsbeispiel näher erläutert. Es zeigen
Fig. 1 Das Transportgerät perspektivisch dargestellt
Fig. 2 Bisher verwendete nicht geeignete Formschlüssigkeit von Zahnriemen auf Treppenstufenkanten
Fig. 3 Darstellung der Reibschlüssigkeit des erfindungsgemäßen Sandwich-Laufbandes an Treppenstufenkanten

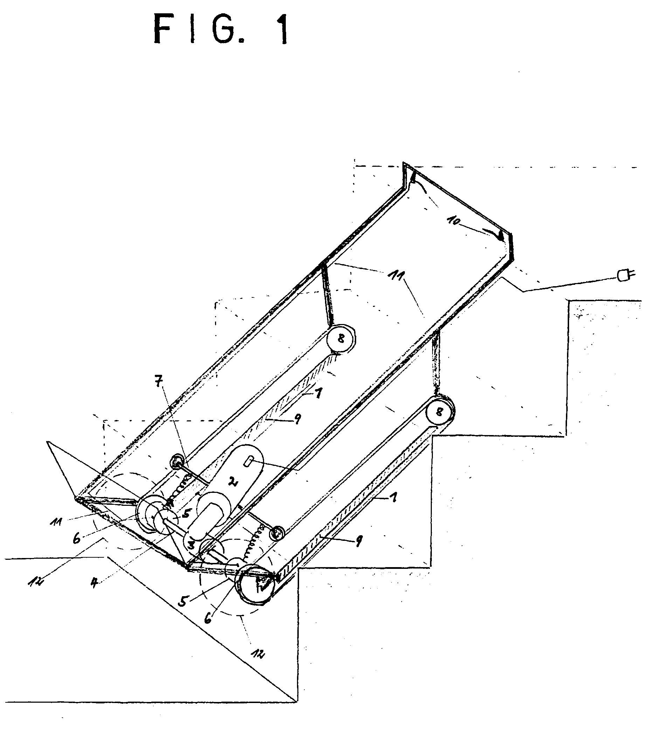

Die in Figur 1 gezeigten Laufbänder (1) werden im Normalzustand von einem Motor (2) über ein Übersetzungsgetriebe (3) und die durchgehende Antriebsachse (4) gemeinsam gleichmäßig angetrieben, weil die Kupplungen - vorzugsweise Zwangskupplungen (5) - die Verbindung zu den sonst freikaufenden Keilriemenscheiben (6) herstellen. Eine Spannvorrichtung (7) sorgt für den notwendigen Reibschluß auf den vorderen Keilriemenscheibe (6) und den hinteren, nur mitlaufenden Keilriemenscheiben (8) Die Gleitschienen (9) führen die Laufbänder (1) zwischen den vorderen und hinteren Keilriernenscheibe über mindestens zwei Treppenstufenkanten und sind mit einem Belag versehen, der einen extrem niedrigen Reibungskoeffizienten aufweist.

Zum Zwecke der Kurvengängigkeit kann nun entweder rechts oder links mit einem Handgriff (10) eine der beiden Zwangskupplungen (5) kurz und entsprechend häufig über einen Bowdenzug (11) gelüftet werden, um kurz den Antrieb für das jeweilige Laufband (1) zu unterbrechen.
Zum Zwecke eines völligen Freilaufes - unabhängig, ob der Motor läuft oder nicht - werden beide Zwangskupplungen gelüftet und so die Verbindung der Keilriemenscheiben (6) mit den Laufbändern (1) von der Antriebsachse (4) gelöst.
Im Zustand der Zwangskupplung verhindert bei Stromausfall die Funktion des Übersetzungsgetriebes (Schneckengetriebe) durch Selbsthemmung ein unkontrolliertes Zurücklaufen des Transportgerätes. Neben der Funktion des Bremsens durch das Schneckengetriebe kann ein Bremsen auch durch je ein Bremsaggregat, verbunden mit den vorderen Keilriemenscheiben, erreicht werden.

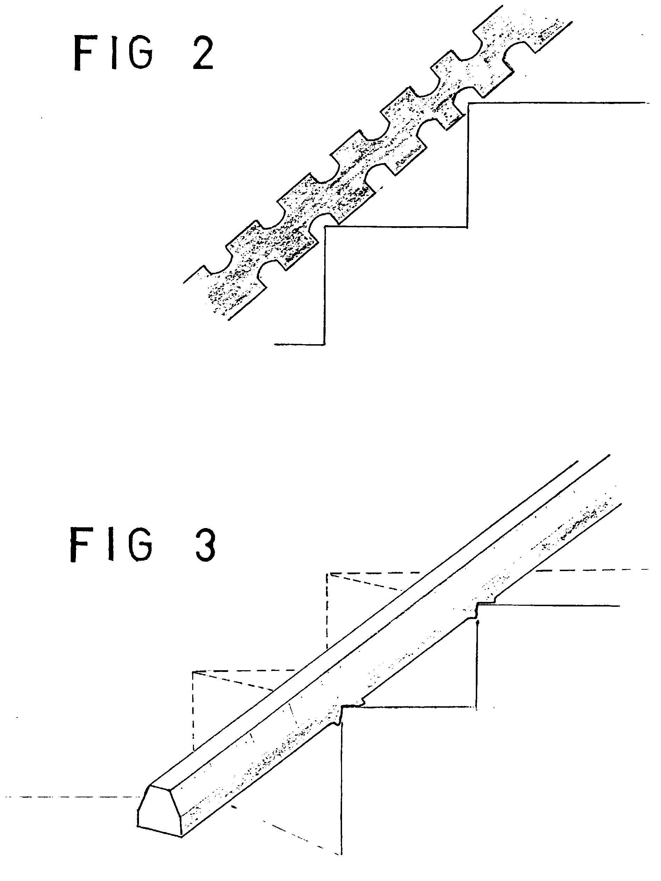

Figur 2 zeigt die Funktion der in der Vergangenheit vorgestellten strukturierten Riemenraupen, bei denen ein Formschluß mit den Treppenstufenkanten angestrebt wird. Nur sehr grobstollige Zähne bewirken hier einen Formschluß, bewirken aber gleichzeitig holpriges Laufverhalten und behindern Kurvengängigkeit auf Treppenstufenkanten.

Figur 3 zeigt die Funktion der erfindungsgemäßen Laufbänder (1), die durch den Linatex-Gummibelag oder einen ähnlichen flexiblen Belag einen hohen Reibschluß erreichen und durch den Quetschvorgang ein Verdrehen auf Treppenstufenkanten ermöglichen.

Nicht dargestellt wird eine weitere, besonders einfache Ausführung eines kurven - und treppengängigen motorischen Transportgerätes, bei dem auf die Verwendung der Zwangskupplungen verzichtet wird. Hierbei sind die anzutreibenden Keilriemenscheiben (6) fest auf der Antriebsachse (4) montiert. Mit den Handgriffen (10) wird über die Bowdenzüge (11) die Spannvorrichtung - (7) jeweils rechts oder links so stark entlastet, daß der Reibschluß des jeweiligen Laufbandes (1) auf die Keilriemenscheibe (6) dieser Seite nicht mehr gegeben ist und der Antrieb somit unterbrochen wird. Bei gleichzeitiger Bedienung beider Handgriffe (10) wird die Spannvorrichtung (7) voll ihrer Funktion entledigt und der Freilauf beider Laufbänder (1) erreicht.

Wird das Transportgerät um den Drehpunkt der Laufräder (12) zur Waagerechten hin abgelenkt oder auf einer nach oben/ unten führenden Treppe gefahren, so übernehmen die motorangetriebenen oder auf Freilauf geschalteten Laufbänder (1) die Funktion des Fahrens.

Die gewerbliche Anwendbarkeit ist in einer großen Breite gegeben, da überall dort, wo mittelschwere bis schwere Güter (z.B. Waschmaschinen) durch Treppenhäuser nach oben oder unten zu transportieren sind, eine den Menschen schonende Transportmöglichkeit mit der vorgestellten Erfindung zur Verfügung gestellt wird. Bei entsprechender Ausstattung des Gestells des Gerätes ist auch ein Personentransport denkbar,

## Patentansprüche

1. Treppengängiges motorangetriebenes, handgesteuertes Transportgerät mit einer Lastaufnahme, mit einem Räderpaar (12) für den horizontalen Transport sowie mit zwei durch Gleitschienen (9) unterstützte Laufbänder (1) für den Schrägtransport, **dadurch gekennzeichnet**, daß die Laufbänder zwei- oder mehrschichtig - mit einer äußeren flexiblen, gummi-ähnlichen Haftschicht und einer inneren Schicht als Keil- oder als Zahnriemen - aufgebaut sind und sie durch handfreigebende Vorrichtungen einzeln oder gemeinsam vom motorischen Antrieb entkuppelt werden.

2. Transportgerät nach Schutzanspruch 1, **dadurch gekennzeichnet**, daß die äußere Schicht der Laufbänder eben ausgebildet ist.

3. Transportgerät nach Schutzanspruch 2, **dadurch gekennzeichnet**, daß die Haftung der Laufbänder auf den Treppenstufen durch das Eindrücken der weichen äußeren Schicht auf den Treppenstufenkanten erreicht wird.

4. Transportgerät nach Schutzanspruch 1 bis 3, **dadurch gekennzeichnet**, daß die Laufbänder im Bereich zwischen den Umlenkrollen (8) durch Gleitschienen abgestüzt werden und auf mindestens zwei Treppenstufenkanten aufliegen können.

5. Transportgerät nach Schutzanspruch 1 bis 3, **dadurch gekennzeichnet**, daß die Laufbänder im Bereich zwischen den Umlenkrollen durch eine Anordnung von Zwischenrollen abgestützt werden.

6. Transportgerät nach Schutzanspruch 1, **dadurch gekennzeichnet**, daß das Entkuppeln von der angetriebenen Keilriemenscheibe durch Aufheben des Reibschlusses zwischen Keilriemenscheibe und Laufband erreicht wird.

7. Transportgerät nach Schutzanspruch 4, **dadurch gekennzeichnet**, daß die Reibung zwischen den Gleitschienen und der Grundfläche der Laufbänder über eine günstige Materialpaarung reduziert wird.

8. Transportgerät nach Schutzanspruch 7, **dadurch gekennzeichnet**, daß der niedrige Reibungskoeffizient durch Anwendung von hochgleitenden weichem Material auf dem Laufband innenseitig und gleitfähigen hartem Material auf den unterstützenden Gleitschienen erreicht wird.

9. Transportgerät nach Schutzanspruch 1, **dadurch gekennzeichnet**, daß die lose, angeordneten aber anzutreibenden Keilriemenscheiben durch je eine Kupplung (5) in Baueinheit mit dieser mit der Antriebsachse zwanghaft verbunden werden.

10. Transportgerät nach Schutzanspruch 9, **dadurch gekennzeichnet**, daß das Entkuppeln mit Handgriffen am Transportgerät mittels Seilzug oder Drahtzug (11) mechanisch, hydraulisch oder elektrisch erfolgt.

11. Transportgerät nach Schutzanspruch 9 bis 10, **dadurch gekennzeichnet**, daß das Gerät beim Abwärtsfahren im entkuppelten Zustand bei nicht eingeschaltetem Motor durch erneutes Einkuppeln des selbsthemmenden Antriebs gebremst wird.

12. Transportgerät nach Schutzanspruch 9 bis 11, **dadurch gekennzeichnet**, daß das Gerät beim Abwärtsfahren im entkuppelten Zustand bei ausgeschaltetem Motor durch Bremsaggregate, die auf die Umlenkrollen einwirken, abgebremst wird.

13. Transportgerät nach Schutzanspruch 12, **dadurch gekennzeichnet**, daß das Entkuppeln des Antriebs und das Bremsen der Umlenkrollen getrennt betätigt werden.

## Claims

1. Motor-driven manually-controlled carrying appartus that can climb steps, comprising a receptacle for the load, a pair of wheels (12) for horizontal conveyance and two conveyor belts (12) supported by slide bars (9) for oblique transport, **characterised in that** the belts have two or more layers - an outer flexible rubber-like adhesive ply and in inner ply as a toothed or vee belt - whereby they may be decoupled from the motor either singly or together, by means of hand-release devices.

2. A carrying apparatus as claimed in claim 1, **characterised in that** the outer ply on the conveyor belts is flat.

3. A carrying apparatus as claimed in claim 2, **characterised in that** the adhesion of the conveyor belts on the steps is achieved by the soft outer ply pressing into the step corners.

4. A carrying apparatus as claimed in any of claims 1 through 3, **characterised in that** the conveyor belts are supported by slide bars between the return pulleys (8), and they can rest on at least two step corners.

5. A carrying apparatus as claimed in any of claims 1 through 3, **characterised in that** the conveyor belts are supported by an arrangement of intermediate rollers located between the return rollers.

6. A carrying apparatus as claimed in claim 1, **characterised in that** the decoupling of the driven V-belt pulley is achieved by releasing the frictional contact between the vee belt pulley and the conveyor belt.

7. A carrying apparatus as claimed in claim 4, **characterised in that** the friction between the slide bars and the base of the conveyor belts is reduced by way of a suitable pairing of materials.

8. A carrying apparatus as claimed in claim 7, **characterised in that** the low coefficient of friction is achieved by using very slippery soft material on the conveyer belt on the inside and slippery hard material on the supporting slide bars.

9. A carrying apparatus as claimed in claim 1, **characterised in that** the slack yet drivable vee belt pulleys are each connected by an integral coupling (5) to the drive shaft.

10. A carrying apparatus as claimed in claim 9, **characterised in that** the de-coupling is effected manually on the carrying apparatus by mechanical, hydraulic or electric actuation using cable or wire (11).

11. A carrying apparatus as claimed in any of claims 9 through 10, **characterised in that** the elevating de-coupled apparatus is braked by reengaging the self-locking drive.

12. A carrying apparatus as claimed in any of claims 9 through 11, **characterised in that** the elevating de-coupled apparatus is braked by sets of brakes that act on the return rollers with the motor switched off.

13. A carrying apparatus as claimed in claim 12, **characterised in that** the de-coupling of the drive and the braking of the return rollers are actuated separately.

## Revendications

1. Appareil de transport à commande manuelle, entraîné par moteur, apte au déplacement sur escaliers, comprenant un porte-charge avec une paire de roues (12) pour le transport horizontal ainsi que deux bandes transporteuses (12), soutenues par des rails de glissement (9), pour le transport incliné, **caractérisé en ce que** les bandes transporteuses comportent deux ou plusieurs couches - avec une couche extérieure adhésive et flexible, genre caoutchouc et une couche intérieure en tant que courroies trapézoïdales ou dentées - et sont débrayées, individuellement ou en commun, de l'entraînement par moteur à l'aide de dispositifs manuels.

2. Appareil de transport selon la revendication 1, **caractérisé en ce que** la couche extérieure des bandes transporteuses est plane.

3. Appareil de transport selon la revendication 2 **caractérisé en ce que** l'adhérence des bandes de transport sur les marches d'escalier est obtenue par compression de la couche extérieure, souple sur les bords des marches de l'escalier.

4. Appareil de transport selon l'une des revendications 1 à 3, **caractérisé en ce que**, les bandes transporteuses sont étayées par des rails de glissement dans la zone comprise entre les poulies de renvoi (8) et peuvent prendre appui sur, au moins, deux bords de marches d'escalier.

5. Appareil de transport selon l'une des revendications 1 à 3, **caractérisé en ce que** les bandes transporteuses sont étayées par un arrangement de poulies intermédiaires dans la zone comprise entre les poulies de renvoi.

6. Appareil de transport selon la revendication 1, **caractérisé en ce que** le débrayage de la poulie à courroie trapézoïdale entraînée est obtenu par suppression de l'entraînement par friction.

7. Appareil de transport selon la revendication 4, **caractérisé en ce que** la friction entre les rails de glissement et la surface de base des bandes transporteuses est réduite par un appariement favorable des matériaux.

8. Appareil de transport selon la revendication 7, **caractérisé en ce que** le faible coefficient de friction est dû à l'utilisation d'une matière souple, bien glissante, pour la face intérieure de la bande transporteuse, et d'une matière dure, apte au glissement sur les rails de glissement de soutien.

9. Appareil de transport selon la revendication 1, **caractérisé en ce que** les poulies à courroies trapézoïales, disposées librement, mais destinées à être entraînées, sont soumises chacune par un embrayage (5), avec lequel elle forme une unité modulaire, à un accouplement forcé avec l'arbre de commande.

10. Appareil de transport selon la revendication 9, **caractérisé en ce que** le débrayage est effectué mécaniquement, hydrauliquement ou électriquement par câbles ou par fils, à l'aide de manettes équipant l'appareil de transport.

11. Appareil de transport selon les revendications 9 et 10, **caractérisé en ce que**, lors de la marche descendante à l'état débrayé et le moteur n'étant pas connecté, l'appareil est freiné par réembrayage de l'entraînement autobloquant.

12. Appareil de transport selon les revendications 9 à 11, **caractérisé en ce que**, lors de la marche descendante à l'état débrayé, le moteur étant arrêté, l'appereil est freiné par des dispositifs de freinage agissant sur les poulies de renvoi.

13. Appareil de transport selon la revendication 12, **caractérisé en ce que** le débrayage de l'entraînement et le freinage des poulies de renvoi peuvent être effectués séparément.
